# EUROPÄISCHE PATENTSCHRIFT

(11) **EP 2 841 268 B1**
(45) Veröffentlichungstag und Bekanntmachung des Hinweises auf die Patenterteilung: **16.03.2016**
(21) Anmeldenummer: 13720821.1
(22) Anmeldetag: 12.04.2013
(51) Int. Cl.: B32B 27/30

(54) **COEXTRUDIERTE SCHLAGZÄHMODIFIZIERTE PMMA-FOLIE**
CO-EXTRUDED IMPACT-MODIFIED PMMA FILM
FEUILLE EN PMMA COEXTRUDÉE À RÉSISTANCE AU CHOC MODIFIÉE

(30) Priorität: 27.04.2012 DE 102012207100
(43) Veröffentlichungstag der Anmeldung: 04.03.2015
(73) Patentinhaber: Evonik Röhm GmbH, 64293 Darmstadt (DE)
(72) Erfinder: GUENANTEN, Claude, 64291 Darmstadt (DE); ENDERS, Michael, 64807 Dieburg (DE); DÖSSEL, Lukas Friedrich, 64295 Darmstadt (DE); POSTERT, Karsten, 65934 Frankfurt (DE); STÖRKLE, Dominic, 64293 Darmstadt (DE)
(86) Internationale Anmeldenummer: PCT/EP2013/057645
(87) Internationale Veröffentlichungsnummer: WO 2013/160121

(56) Entgegenhaltungen:
- DE-A1-102005 062 687

## Beschreibung

### Gebiet der Erfindung

Die vorliegende Erfindung betrifft neuartige mattierte PMMA-Folien zur Applikation auf Werkstoffen als Schutzfolie vor Witterungseinflüssen und als Dekorfolie. Insbesondere betrifft die vorliegende Erfindung eine neuartige, mindestens zweischichtige PMMA-Folie, die sich durch eine besonders gute Haftung auf dem Substrat auszeichnet. Dabei weist die äußere Schicht die Mattierung auf und die innere Schicht enthält eine niedermolekulare Komponente, die die Haftung auf dem Substrat verbessert.

### Stand der Technik

Zum Schutz von Werkstoffen gegen mechanische Beanspruchung und gegen Witterungseinflüsse hat sich eine Beschichtung derselben mit einer transparenten PMMA-Folie bewährt. Solche Folien weisen eine glatte, hochglänzende Oberfläche auf. Es gibt nun eine Reihe von Anwendungen, für die eine matte, gering reflektierende Oberfläche erwünscht ist. Matte Oberflächen von thermoplastischen Kunststoffsubstraten, insbesondere von Folien, werden im Allgemeinen mit Hilfe einer speziellen Mattwalze oder einer gummierten Walze hergestellt. In JP 90 28 239 wird beispielsweise die Herstellung eines Films oder einer Platte mit matter Oberfläche, bestehend aus Vinylidenfluorid-Harz und Methacrylsäureester-Harz, durch Extrusion und Führung des Extrudats durch eine Prägerolle beschrieben. Solchermaßen hergestellte Folien haben jedoch den Nachteil, dass sie bei geringfügiger Verstreckung, wie sie beispielsweise beim Kaschieren von Folien über Kanten auftritt, bzw. durch das Pressen beim Kaschiervorgang (siehe hierzu Winnacker/Küchler, Bd. 6, S. 471, 4. Aufl., 1982, Carl Hanser Verlag München, Wien) ihre Prägestruktur und damit ihre Mattierung verlieren.

Des weiteren können Matteffekte an der Oberfläche durch Polymermischungen mit einer bestimmten heterogenen Mischphasenmorphologie, welche gegebenenfalls durch weitere Zusätze stabilisiert wird, erzeugt werden. Dimensionsstabile Mattierungsmittel stellen anorganische Pigmente dar, wie sie beipsielsweise in JP 89 234 427 angeführt werden. Hier wird eine matte Oberfläche auf Polyesterfilmen durch den Zusatz von CaC0₃ oder BaS0₄ zusammen mit Mikrokugeln aus Acrylpolymeren, wie Polymethylmethacrylat, bei der Extrusion erzeugt. Aufgrund der hohen Brechungsindices der anorganischen Pigmente ist die Transparenz der Filme bedingt durch hohe Streulichtverluste jedoch sehr gering. Ein weiterer Nachteil ist der Verschleiß der Walzenoberflächen bei der Folienextrusion, hervorgerufen durch die einen Abrieb verursachenden anorganischen Pigmente.

In einer Reihe von Anmeldungen werden daher vernetzte Polymerpartikel als Streupigmente eingesetzt, die den Matteffekt erzeugen. So beschreibt JP 84 89 344 einen wetterbeständigen Schutzfilm mit matter Oberfläche, bestehend aus Mischungen von Polymerisaten aus fluorierten, ethylenisch ungesättigten Monomeren, einem mehrstufig hergestellten vernetzten (Meth)acrylat-Polymerisat und einem Mattierungsmittel, das aus vernetzten Teilchen mit einem mittleren Durchmesser zwischen 1 und 500 nm besteht. Das Streuvermögen dieser Teilchen beruht einerseits auf deren Größe, andererseits auf der Differenz der Brechungsindices zwischen Teilchen und Matrix. Von Nachteil ist die Unverträglichkeit zwischen Teilchen und Matrix, was zu einer erheblichen Verschlechterung der mechanischen Eigenschaften des Matrixmaterials führt.

EP 1 249 339 beschreibt eine PMMA-Folie, die einerseits ein Mattierungsmittel, bei dem es sich um OH-funktionelle Poly(meth)acrylate handelt, nach Stand der Technik enthält und andererseits einseitig mittels einer entsprechenden Walze oberflächenstrukturiert ist und auf der anderen Seite glatt ist.

In EP 1 380 403 ist ein sehr ähnliches Verfahren zur Herstellung von PMMA-Folien beschrieben, nur dass hier die einseitige Mattierung durch unterschiedliche Walzentemperaturen und nicht durch unterschiedliche Walzenoberflächen erzeugt wird.

Sämtliche Folien, die Mattierungsmittel enthalten, weisen jedoch eine verminderte Haftung auf Substraten wie zum Beispiel PVC auf. Die Mattierungsmittel führen in der Regel zu einer entsprechend verminderten Haftung. Um die Haftung zu verbessern gibt es zum einen die Möglichkeit, einen Kleber oder oberflächlich aufgetragenen Haftvermittler einzusetzen. Dies hat jedoch den Nachteil, dass ein zusätzlicher Verfahrensschritt bei der Applikation nötig ist. Alternativ gibt es die Möglichkeit, die Polymermatrix weicher einzustellen. Hierdurch wird jedoch die Folie auch während der Verarbeitung bei höheren Temperaturen derart klebrig, dass es beim Abziehen von Vorratsrollen zu Problemen kommt. Bei deutlich höheren Laminiertemperaturen werden die Mattierungsmittel in der Folienformmasse durch den Laminierdruck versenkt, bzw. die Laminier- oder Prägewalzenoberfläche auf die Verbundoberfläche abgebildet. Der Effekt der Mattierungsmittel wird dadurch vermindert Insbesondere PVC ist ein wichtiges Substrat für solche mattierte Folien, da hiermit z.B. Fensterprofile, Tore oder Fassadenelemente mit einem Dekor versehen werden können und gleichzeitig ein Witterungsschutz gewährleistet werden kann.

EP 0 528 196 offenbart eine PMMA-Folie, die als Mattierungsmittel vernetzte Polymethacrylatpartikel enthält. Zwar tragen solche Partikel besser zur Haftung auf einem Substrat bei als anorganische Partikel, dennoch ist auch bei einem solchen System die Haftung noch deutlich zu verbessern.

Dieses Problem wurde gemäß WO 2006/043672 dadurch gelöst, dass eine transparente PMMA-Folie mit einem Mattierungslack einseitig beschichtet wird. Ein ähnliches System findet sich auch in der JP 2008-030353 (Veröffentlichungsnummer). Hier wird eine schlagzähe PMMA-Folie mit einem Lack beschichtet, der aus einem Acrylatbindemittel und Silicapartikeln besteht. Damit ist zwar die dem Substrat zugewandte Seite frei von Mattierungsmitteln, jedoch haben solche Systeme den Nachteil, dass eine dünne Mattierungsbeschichtung deutlich empfindlicher gegenüber Abrieb ist, als eine PMMA-Folie, bei der das Mattierungsmittel in der Matrix enthalten ist. Darüber hinaus zeigen auch diese PMMA-Folien noch keine ideale Haftung gegenüber einigen Substraten wie z.B. PVC.

In US 2009/0252936 schließlich ist ein transparentes Coextrudat aus einer Polycarbonat- und einer PMMA-Schicht, das zusätzlich mit einer 1 bis 20 µm dicken mattierten Schicht versehen ist, offenbart. Auch hier wird die mattierte Schicht gleichfalls als Lack aufgetragen. Weiterhin lehrt auch diese Offenbarung nicht, wie man die Haftung der mattierten Folien gegenüber dem Substrat auf einfache Art verbessern kann. Dazu sei angemerkt, dass Polycarbonate gegenüber vielen Substraten im Vergleich zu PMMA eine noch schlechtere Haftung aufweisen.

### Aufgabe

Aufgabe der vorliegenden Erfindung war es somit in Hinblick auf den Stand der Technik, eine neuartige PMMA-Folie zur Verfügung zu stellen, die einfach und ohne zusätzliche Klebeschicht zu applizieren ist und dabei eine gute Anfangs- sowie Langzeithaftung auf dem Substrat, wie z.B. PVC, zeigt.

Insbesondere war es Aufgabe der vorliegenden Erfindung, eine neuartige mattierte PMMA-Folie mit besonders guter Anfangs- sowie Langzeithaftung zur Verfügung zu stellen.

Darüber hinaus war die Bereitstellung einer Folie, die neben einer hohen eigenen Witterungsstabilität einen ausreichenden Schutz für witterungsempfindliche Gegenstände gegen Feuchtigkeit, Wind, Sonnenstrahlung und insbesondere UV-Strahlung gewährleistet, Aufgabe der vorliegenden Erfindung.

Darüber hinaus sollen die mattierten PMMA-Folien eine optisch gute, langzeitstabile Mattierung aufweisen.

Weitere nicht explizit genannte Aufgaben ergeben sich aus der folgenden Beschreibung sowie den Beispielen und den Ansprüchen der vorliegenden Schrift.

### Lösung

Gelöst werden die Aufgaben mittels einer neuartigen PMMA-Folie, die mindestens zwei Schichten aufweist, welche wiederum jeweils ein PMMA-Matrixmaterial aufweisen. Insbesondere ist diese PMMA-Folie dadurch gekennzeichnet, dass mindestens eine der beiden Schichten ein Schlagzähmodifizierungsmittel enthält, und dass die innere Schicht zusätzlich zu dem PMMA-Matrixmaterial zwischen 2,0 und 20 Gew% eines oligomeren PMMA, mit einem gewichtsmittleren Molekulargewicht zwischen 300 und 1500 g/mol enthält. Bevorzugt enthält das Matrixmaterial der inneren Schicht zwischen 5,0 und 18 Gew% und besonders bevorzugt zwischen 10 und 12 Gew% des oligomeren PMMA. Das mittlere Molekulargewicht wird dabei mittels SEC gegen einen PMMA-Standard gemessen.

Überraschend wurde gefunden, dass entsprechende Folien, den oligomeren Bestandteil in den angegebenen Mengen enthaltend, eine besonders gute Haftung der inneren Schicht auf einem Substrat, wie z.B. PVC, bewirkt, und dass diese Haftung besonders lange hält, ohne dass die übrigen mechanischen oder optischen Eigenschaften der Folie negativ beeinflusst würden. Genauso überraschend wurde gefunden, dass durch den Aufbau als zweischichtige Folie, die oligomere Komponente nur in der inneren Schicht enthaltend, eine Folie zur Verfügung gestellt werden konnte, die an der Außenseite, auch unter höheren Temperaturen, nicht klebrig wird und entsprechend a) gut zu verarbeiten ist und b) nach der Applikation auf einem Substrat genauso gute Oberflächeneigenschaften wie weniger gut haftende Folien des Standes der Technik aufweisen.

Weiterhin haben die erfindungsgemäßen PMMA-Folien den Vorteil, dass sich die Innenseite der Folie gegenüber Folien des Standes der Technik besser bedrucken lässt.

In einer bevorzugten Ausführungsform handelt es sich bei der PMMA-Folie um eine Folie, die in der äußeren Schicht zwischen 0,5 und 20 Gew%, bevorzugt zwischen 2,0 und 18 Gew% und besonders bevorzugt zwischen 4,0 und 15 Gew% eines oder mehrerer Mattierungsmittel enthält. Bei diesen Mattierungsmitteln handelt es sich insbesondere um SiOₓ-, TiO₂-, BaSO₄-, BaCO₃-Partikel, um vernetzte Polymerpartikel oder um Mischungen aus zwei oder mehreren dieser Partikel. Die vernetzten Polymerpartikel sind bevorzugt vernetzte PMMA- oder Silikonpartikel. Besonders bevorzugt handelt es sich bei den Mattierungsmittel um vernetzte PMMA-Partikel.

Die Partikel, die als Mattierungsmittel verwendet werden, haben in der Regel einen Durchmesser zwischen 1 und 40 µm, bevorzugt zwischen 1,5 und 20 µm und besonders bevorzugt zwischen 2,0 und 6,0 µm.

In einer weiteren Ausführungsform, die auch mit der zuvor genannten bevorzugten Ausführungsform kombiniert vorliegen kann, weist die innere Schicht zwischen 0,01 und 0,5 Gew%, bevorzugt zwischen 0,02 und 0,05 Gew% eines oder mehrerer Antiblockingsmittel enthält. Das Antiblockungsmittel in der inneren Schicht sorgt dafür, dass die Folien während der Verarbeitung, zum Beispiel beim Abziehen von einer Vorratsrolle, leichter von der darunterliegenden Lage zu trennen sind. Dies führt zu schnelleren Prozessabläufen und einer störungsfreieren Verarbeitung. Bei diesen Antiblockungsmittel handelt es sich insbesondere um SiOₓ-, TiO₂-, BaSO₄-, BaCO₃-Partikel, vernetzte PMMA-Partikel oder vernetzte Silikon-Partikel mit einem Durchmesser zwischen 0,5 µm und 40 µm, bevorzugt zwischen 1,5 und 20 µm und besonders bevorzugt zwischen 2,0 und 6,0 µm. Bevorzugt werden Siliziumoxid- (SiOₓ-)Partikel als Antiblockungsmittel verwendet.

Bei dem erfindungsgemäß in der PMMA-Folie enthaltenen Schlagzähmodifizierungsmitteln handelt es sich bevorzugt um einen Kern-Schale- oder einen Kern-Schale-Schale-Partikel, mit mindestens einer Schale aus einem Poly(meth)acrylat. Insbesondere bevorzugt sind Partikel mit einem weichen Kern, d.h. einem Kern, der eine Glasübergangstemperatur unterhalb von 0 °C, bevorzugt unterhalb von -10 °C und einer Schale mit einer Glasübergangstemperatur oberhalb von 20 °C, bevorzugt oberhalb von 70 °C. In der Regel besteht die Weichphase dabei überwiegend aus Acrylatwiederholungseinheiten mit 1 bis 6 Kohlenstoffatomen im Alkylrest und die Hartphase überwiegend aus MMA-Wiederholungseinheiten. Die Schlagzähmodifizierungsmittel haben bevorzugt einen mittleren Teilchendurchmesser von 10 bis 150 nm. Die Bestimmung des Teilchendurchmessers erfolgt im Falle der Schlagzähmodifizierungsmittel mittels Messungen nach der Ultrazentrifugenmethode. Eine genauere Beschreibung geeigneter Schlagzähmodifizierungsmittel für ein PMMA-Matrixmaterial findet sich in WO 2007/073952.

Der schlagzähmodifizierte Poly(meth)acrylat-Kunststoff der inneren und/oder der äußeren Schicht besteht in der Regel aus 20 bis 80 Gew%, bevorzugt aus 30 bis 70 Gew% des PMMA-Matrixmaterials und aus 20 bis 80 Gew%, bevorzugt aus 30 bis 70 Gew% Schlagzähmodifizierungsmittel. Bei diesen Angaben sind Mattierungsmittel, Antiblockungsmittel und eventuelle weitere Additive oder Farbstoffe nicht berücksichtigt. In den Massenangaben zm PMMA-Matrixmaterial enthalten ist jedoch das oligomere PMMA.

Die Schlagzähmodifizierungsmittel können sowohl in der inneren, als auch in der äußeren Schicht der PMMA-Folie enthalten sein. In einer besonders bevorzugten Ausführungsform sind in beiden Schichten Schlagzähmodifizierungsmittel enthalten, wobei es sich jeweils um die gleichen als auch um verschiedene Schlagzähmodifizierungsmittel handeln kann.

Die erfindungsgemäße PMMA-Folie besteht neben eventuellen Zuschlagsstoffen, Mattierungsmitteln und/oder Antiblockingsmitteln aus den genannten Schlagzähmodifizierungsmitteln und dem PMMA-Matrixmaterial. Dabei bedeutet PMMA-Matrixmaterial nicht unweigerlich, dass dieses ausschließlich aus PMMA besteht, sondern dass die zur Herstellung verwendete Monomerzusammensetzung 80 bis 100 Gew% MMA enthält. Darüber hinaus kann die zur Polymerisation eingesetzte Monomerzusammensetzung weitere 0 bis 20 Gew% eines oder mehrerer weiterer ethylenisch ungesättigter, radikalisch mit MMA copolymerisierbarer Monomerer enthalten. Bevorzugt handelt es sich dabei um Alkylacrylate. Eine Vorschrift zur Herstellung geeigneter Matrixmaterialien und eine Auflistung der verwendbaren Comononere finden sich in EP 1 963 415. Diese Angaben sind sowohl für das Matrixmaterial der äußeren Schicht wie auch für die 80 bis 98 Gew% des PMMA-Matrixmaterials der inneren Schicht, die nicht die oligomere Komponente darstellen, anzuwenden.

In einer besonderen Ausführungsform handelt es sich bei der äußeren Schicht um eine mechanisch belastbare PMMA-Schicht. Dies bedeutet, dass das dort verwendete PMMA-Matrixmaterial ein besonders hohes Molekulargewicht aufweist. Dieses besonders hohe Molekulargewicht liegt zwischen 100 000 und 200 000 g/mol, bevorzugt zwischen 120 000 und 170 000 g/mol.

Bezüglich der Zusammensetzung gilt für die oligomere PMMA-Komponente, die in einer Konzentration zwischen 2,0 und 20 Gew% in dem PMMA-Matrixmaterial der inneren Schicht enthalten sein kann, insbesondere das gleiche wie für die nicht oligomeren Bestandteile des PMMA-Matrixmaterials, wie es im Absatz zuvor ausgeführt ist. Bevorzugt zeigt die oligomere Komponente die gleiche oder zumindest eine sehr ähnliche Zusammensetzung auf wie die nicht-oligomeren Bestandteile des PMMA-Matrixmaterials der inneren Schicht. Die oligomere PMMA-Komponente kann dazu mittels Substanzpolymerisation oder Lösungspolymerisation unter anschließendem Entfernen des Lösungsmittels oder Fällen des Polymers, z.B. in Methanol oder Diethylether, hergestellt werden. Die Synthese ist dem Fachmann leicht herleitbar. Um ein entsprechend niedriges Molekulargewicht zwischen 300 und 1500 g/mol zu realisieren, werden entsprechend hohe Konzentrationenen eines Initiators und optional hohe Konzentrationen eines Reglers (Kettenübertragungsreagenzes) bei optional hohen Temperaturen, von beispielsweise über 100 °C, eingesetzt.

Als Initiatoren zur Herstellung der oligomeren PMMA-Komponente werden dazu in der Regel Peroxide und/oder Azoinitiatoren, bevorzugt mit einer derartigen Zerfallstemperatur, dass die Halbwertszeit von einer Stunde unterhalb von 100 °C, bevorzugt unterhalb von 80 °C und besonders bevorzugt unterhalb von 60 °C liegt, verwendet. Zusätzlich können zur Realisierung der niedrigen Molekulargewichte zwischen 300 und 1500 g/mol Regler eingesetzt werden. Bei diesen handelt es sich in der Regel um Mercaptane, die großtechnisch zu diesem Zweck verwendet werden, und deren gezielte Auswahl dem Fachmann leicht fallen sollte.

Eine Lösungspolymerisation wird bevorzugt in einem Keton wie Aceton oder Methylethylketon oder in einem Acetat, wie z.B. Ethyl-, Propyl- oder Butylacetat, durchgeführt. Die genannten Lösungsmittel haben den Vorteil, dass sie großtechnisch zu diesem Zweck etabliert und toxikologisch unbedenklich sind. Weiterhin sind diese Lösungsmittel nach der Polymerisation einfach und vollständig entfernbar.

Die so hergestellte oligomere PMMA-Komponente wird vor der Herstellung der Folie mit dem Schlagzähmodifier, dem übrigen, höhermolekularen PMMA-Matrixmaterial für die innere Schicht und eventuellen weiteren Zuschlagsstoffen vermischt. Dies erfolgt entweder in einem separaten Verfahrensschritt mittels eines Mischextruders oder-kneters oder direkt im Extruder oder Coextruder der zur Herstellung der Schicht in Form einer Folie zur Herstellung einer Laminatschicht oder einer Coextrudatsschicht verwendet wird. Im Falle zweier getrennter Verfahrensschritte können die beiden Geräte, z.B. der Mischextruder und der Extruder zur Folienextrusion, auch in-line miteinander Verbunden sein, so dass eine Isolierung des Gemischs entfällt.

Alternativ kann die oligomere PMMA-Komponente auch in-situ zusammen mit dem PMMA-Matrixmaterial für die innere Schicht hergestellt werden. Dazu kann der Polymermischung beispielsweise nach einem Umsatz von 70 bis 95 Gew% der Monomere ein zweiter Initiator mit sehr niedriger Zerfallstemperatur in hohen Konzentrationen zugeführt werden. Alternativ oder zusätzlich kann die Reaktortemperatur gegen Ende der Reaktion deutlich gesteigert werden und optional ein Regler oder weiterer Regler zugegeben werden. Eine solche Temperatursteigerung kann zum Beispiel über 20 °C, bevorzugt über 30 °C oberhalb der eigentlichen Reaktionstemperatur liegen. Durch eine solche Temperatursteigerung wird zum einen der Initiatorzerfall beschleunigt - und somit die Initiatorkonzentration erhöht. Zum anderen finden Kettenabbrüche bzw. die Reaktion mit vorhandenen Reglern bevorzugt statt. Alternativ kann auch ein Reaktor verwendet werden, der über zwei getrennte Reaktionszonen mit unterschiedlichen Reaktionsbedingungen, wie z.B. die Initiatorkonzentration und/oder Temperatur, verfügt und der Inhalt dieser Reaktionszonen gegen Ende oder nach der Polymerisation zusammengeführt werden.

Die innere und/oder die äußere Schicht der erfindungsgemäßen Folie können über die beschriebenen Komponenten hinaus weitere Zuschlagsstoffe, wie z.B. Farbstoffe - bevorzugt Farbstoffe zur transparenten Einfärbung - Verarbeitungshilfen oder Stabilisatoren enthalten. Besonders bevorzugt enthalt die innere und/oder äußere Schicht, insbesondere bevorzugt die äußere Schicht ein UV-Stabilisatorpaket. Bevorzugt setzt sich dieses Stabilisatorpaket aus UV-Absorbern und UV-Stabilisatoren zusammen. Bei den UV-Stabilisatoren handelt es sich dabei in der Regel um sterisch gehinderten Amine (Hindered Amine Light Stabilizer; HALS-Verbindungen). Bei den UV-Absorbern kann es sich um Benzophenone, Salicylsäureester, Zimtsäureester, Oxalanilide, Benzoxazinone, Hydroxyphenylbenztriazole, Triazine, Benztriazole oder Benzyliden-Malonate handeln, bevorzugt um Triazine und/oder Benztriazole und besonders bevorzugt um eine Mischung aus Triazinen und Benztriazolen. Alternativ können UV-Absorber auch mittels einer polymerisationsaktiven Gruppe in das Matrixmaterial einpolymerisiert sein. Eine ausführliche Auflistung geeigneter Verbindungen und deren bevorzugter Konzentration in PMMA-Folien bzw. -Schichten findet sich in EP 1 963 415.

Die erfindungsgemäßen PMMA-Folien weisen bevorzugt im Bezug auf die innere und die äußere Schicht eine Dicke zwischen 4 und 200 µm auf, wobei die innere Schicht eine Dicke zwischen 2 µm und 100 µm, bevorzugt zwischen 10 und 60 µm und die äußere Schicht eine Dicke zwischen 2 µm und 100 µm, bevorzugt zwischen 5 µm und 50 µm aufweist.

Optional kann die erfindungsgemäße PMMA-Folie eine dritte Schicht mit einer Dicke zwischen 2 µm und 100 µm, bevorzugt zwischen 5 µm und 50 µm aufweisen. Diese optionale dritte Schicht befindet sich dabei auf der äußeren Schicht. Bevorzugt besteht diese dritte Schicht aus einem kratzfesten PMMA-, aus PVDF-, aus einem Laminat bzw. einem Coextrudat oder einem Blend aus PMMA und PVDF (letztere wird im Weiteren kurz unter dem Sammelbegriff PMMA/PVDF-Schicht zusammengefasst). Bei einer weiteren optionalen vierten Schicht kann es sich beispielsweise auch um eine Lack-, Dekorschicht oder eine Kratzfestbeschichtung handeln.

Die erfindungsgemäße Folie kann mittels Lamination, optional mit einer Klebeschicht zwischen innerer oder äußerer Schicht, mittels eines Gussverfahrens oder - bevorzugt - mittels Coextrusion hergestellt werden.

Neben der erfindungsgemäßen PMMA-Folie ist auch deren Verwendung in Form eines Verfahrens zur Beschichtung eines Gegenstands Bestandteil der vorliegenden Erfindung. Dieses Verfahren ist dadurch gekennzeichnet, dass die erfindungsgemäße Folie durch Kaschieren und/oder Verkleben mit dem Gegenstand fest verbunden wird. Bei diesem Gegenstand handelt es sich bevorzugt um einen Gegenstand aus einem Kunststoff, insbesondere aus PVC oder ABS. Dieser Gegenstand kann z.B. ein PVC-Fensterprofil sein. Es ist jedoch auch möglich, die erfindungsgemäße PMMA-Folie auf eine Metalloberfläche und/oder eine mit einem Kleber, z.B. einem PU-Kleber, versehene Oberfläche zu kaschieren. Darüber hinaus kann es sich bei dem Gegenstand auch um eine weitere Folie handeln, auf die die erfindungsgemäße PMMA-Folie laminiert oder extrudiert, bzw. coextrudiert wird.

### Beispiele

Die SEC-Messungen (oder auch GPC-Messungen genannt) erfolgten bei 35 °C Säulenofentemperatur mit THF als Eluotionsmittel. Die Auswertung erfolgte gegen einen PMMA-Standard. Die Anlage weist folgende Säulenkombination auf: eine SDV LinL 10 µm Vorsäule (8 * 50 mm), 2 SDV LinL 10 µm Säulen (8 * 300 mm), 2 SDV 100Å 10 µm Säulen (8 * 300 mm) (alle von der Firma PSS, Mainz) und eine KF-800D Solvent-Peak Seperation Säule (8 * 100 mm) (Fa. Shodex). Die Auswertung erfolgt mittels PSS Win GPC-Software.

Der Glanzgrad wird als Reflektometerwert nach DIN 67 530 gemessen. Der Messwinkel betrug 60°. Die Messung erfolgte auf einer schwarzen matten Unterlage vom Type EUROPLEX PC 2339H.

Visuellen Begutachtung nach feuchte Lagerung bei erhöhter Temperatur: Die Verbundfolien werden bei 60 °C und ca. 98% relativer Feuchte mit einem feuchten Tuch beaufschlagt. Während Lagerzeiten von bis zu einem Jahr prüft man visuell die Haftung in Zeitintervallen von jeweils einem Monat. Bei schlechter Haftung erfolgt eine Delamination.

Abzugsschnelltest: Eine handelsübliche Aluminiumfolie wird auf einer Teflonplatte mit einer spiegelnden Seite nach oben glattgestrichen. Anschließend werden die zu prüfenden PMMA-Folien mit der inneren Seite auf diese glatte Oberfläche aufgelegt und mit einem Schwamm glattgestrichen. Auf die äußere Seite der PMMA-Folie wird eine zweite Aluminiumfolie mit der spiegelnden Seite aufgelegt und mit einem Schwamm glattgestrichen. Die Aluminiumfolien wurden derart aufgelegt, dass jeweils an einer Seite ein mindestens 2 cm langer Streifen übersteht. Abschließend wird eine Metallplatte aufgelegt und der gesamte Prüfkörper für 1 min bei 170 °C mit 70 bar in einer Plattenpresse gepresst. Nach dem Entfernen der Teflon- und der Metallplatte werden die Aluminiumstreifen abgezogen und mit einem Wert zwischen 1 (kaum Haftung) und 5 (starke Haftung) beurteilt.

Boilingtest: Die PMMA-Folien werden analog zum Abzugsschnelltest auf der inneren Seite mit einer PVC-Folie und auf der äußeren Seite mit einer Aluminiumfolie verpresst. Die Aluminiumfolie wird nach dem Pressen entfernt. Die PVC-PMMA-Verbundfolien werden für 24h in siedendem (100°C) oder 90 °C heißem Wasser gelagert. Bei guter Haftung werden keine visuell erkennbaren Unterschiede erwartet, ist die Haftung jedoch schlecht, findet man Blasenbildung zwischen den Schichten und andere visuell erkennbare Effekte.

### Beispiel 1: Herstellung der oligomeren Komponente

In einem 2L-Rührkessel mit Flügelrührern, Thermometer mit Schreiber und einem beheizbaren Ölmantel mit angeschlossenem Thermostat werden 60 g Methoxypropylacetat (Dowanol PMA der Fa. Dow Chemical) als Lösungsmittel, 24 g Methylmethacrylat (MMA) und 1 g MA (Methylacrylat) vorgelegt. Zu dieser Mischung werden 3,0 g tert-Butylper-2-ethylhexanoat und 7,0 g n-DDM (n-Dodecylmercaptan) gegeben und unter Rühren auf 90 °C erhitzt. Nach Feststellen einer Exottherme wird mit der Dosierung einer Mischung aus 446 g MMA, 19 g MA und 150 g n-DDM begonnen und gleichzeitig die Mantelöltemperatur auf 110 °C erhöht. Die Dosierungrate betrug dabei 2,3 g/min und dauerte ca. 4,3 h. Nach abgeschlossener Dosierung wird eine Lösung aus 38,8 g tert-Butylper-2-ethylhexanoat in 80 g Methoxypropylacetat über einen Zeitraum von 350 min unter Rühren bei gleichfalls 110 °C Öltemperatur zudosiert. Nach abgeschlossener zweiter Dosierung wird für weitere 60 min bei 110 °C gerührt. Die volatilen Bestandteile werden nach dem Abkühlen am Rotationsverdampfer entfernt und das Produkt im Hochvakuum anschließend bei 60 °C getrocknet. Die Molekulargewichtsbestimmung erfolgte mittels SEC. Das Oligomer hat einen M_{w} von 1100 g/mol.

### Material für die innere Schicht

Als Material für die innere Schicht wird ein Copolymer aus 63,5 Gew% MMA, 34,3 Gew% n-Butylacrylat, 0,5 Gew% Methylacrylat und 1,7 Gew% Allylmethacrylat verwendet. Dabei liegt diese Formmasse zweiphasig vor. Zum einen liegen Kern-Schale-Partikel mit einem Kern aus n-Butylacrylat und einer Schale aus den anderen drei Komponenten vor. Diese Komponente stellt den Schlagzähmodifier dar. Daneben liegt ein thermoplastisches Matrixmaterial, bestehend aus MMA und Ethylacrylat vor. Dieses Polymer weist einen M_{w} von ca. 95 000 bis 100 000 g/mol auf. Das material der inneren Schicht weist eine Vicat-Erweichungstemperatur von 71 °C und der thermoplastische Anteil eine Glasübergangstemperatur von ca. 81 °C auf. Das Material der inneren Schicht enthält zusätzlich, bezogen auf 100 Gew% der beschriebenen Polymerzusammensetzung 1,0 Gew% Tinuvin 360, 1,0 Gew% Sabostab 119 und 1,0 Gew% CGX UVA 006 als UV-Stabilisierungspaket. Weiterhin enthält das Material der inneren Schicht - wieder bezogen auf 100 Gew% Polymerzusammensetzung - 0,02 Gew% Sipernat 44MS der Fa. Evonik Industries (SiO₂-Partikel) als Antiblockingsmittel.

### Material für die äußere Schicht

Die äußere Schicht enthält 15 Gew% Mattierungsmittel auf PMMA-Basis. Dieses Mattierungsmittel hat eine Zusammensetzung aus 45 Gew% MMA, 45 Gew% n-Butylacrylat, 7 Gew% Ethylacrylat und 3 Gew% Glycoldimethacrylat. Weiterhin enthält die äußere Schicht in einem Anteil von 52 Gew% einen Schlagzähmodifier mit einer Kern-Schale-Struktur, wobei der Kern überwiegend aus Acrylaten und die Schale überwiegend aus Methacrylaten zusammengesetzt ist. Dieser Kern-Schale-Partikel hat eine Gesamtzusammensetzung aus 58,6 Gew% MMA, 40,7 Gew% n-Butylacrylat und 0,7 Gew% Allylmethacrylat. Daneben liegen 39 Gew% eines thermoplastischen Matrixmaterials, bestehend aus MMA und 1 Gew% Methylacrylat vor. Das Material der äußeren Schicht enthält zusätzlich, bezogen auf 100 Gew% der beschriebenen Polymerzusammensetzung 1,0 Gew% Tinuvin 360, 1,0 Gew% Sabostab 119 und 1,0 Gew% CGX UVA 006 als UV-Stabilisierungspaket. Dieses Polymer weist einen M_{w} von ca. 95 000 bis 100 000 g/mol auf. Insgesamt hat das Material der äußeren Schicht eine Vicat-Erweichungstemperatur von mindestens 81 °C, eine Glasübergangstemperatur von mindestens 91 °C und einen Glanzgrad bei 60° von 20 ± 5. Dieser Glanzwert entspricht dem Glanzwert einer mattierten Folie nach Stand der Technik.

### Beispiel 2: Herstellung des Polymergranulats für die innere Schicht (allgemeine Vorschrift)

Die beschriebenen Komponenten des Materials der inneren Schicht werden zusammen mit dem Polymerisat aus Beispiel 1 in einem Doppelschneckenextruders und über eine Granulierdüse zu Strängen ausgetragen. In einem nach geschalteten Granulator wurden die Stränge zu Granulatkörnern zerteilt. Bezogen auf die Polymerkomponenten des "Materials der inneren Schicht" werden 10 Gew% der oligomeren Komponente aus Beispiel 1 zugegeben.

### Beispiel 3: Herstellung der Folie

Zur Herstellung der zweischichtigen Folie wurde ein Chill-Roll-Prozess verwendet. Die hierzu eingesetzte Extrusionsanlage bestand aus zwei (optional drei) Einschneckenextrudern mit jeweils einer Schmelzepumpe und einer Mehrschichtdüse (Breitschlitzextrusionsdüse mit zwei Verteilerkanälen). Die Gesamtapparatur wies zusätzlich ein Walzwerk (L-Konfiguration) und eine Wickelvorrichtung auf.
Im ersten Einschneckenextruder A zur Herstellung der inneren Schicht wurde die schlagzähmodifizierte Polymethylmethacrylat gemäß des oben aufgeführten "Material der inneren Schicht" eingesetzt.
Im zweiten Einschneckenextruder B zur Herstellung der äußeren, in diesem Beispiel zumeist mattierten Schicht, wurde die schlagzähmodifizierte Polymethylmethacrylat Formmasse gemäß des oben aufgeführten "Material der äußeren Schicht" eingesetzt..
Im Abstand von ca. 25 mm zur Austrittsöffnung der Mehrschichtdüse war eine Chill-Roll-Walze mittig positioniert. Die Temperatur der Chill-Roll Walze wurde zwischen 70°C und 130°C eingestellt, bevorzugt von 90°C bis 100°C. Die Temperatur des Schmelzestroms betrug ca. 240°C. Die innere Schicht vom Schmelzefilm legte sich annähernd tangential an die Walzenoberfläche an und umschlang die Walze um ca. 90°. Nach Umschlingung der weiteren Nachkühlwalzen wurde die Dicke der Folienbahn durch ein traversierend angeordnetes, berührungsloses Meßsystem ermittelt und mittels elektronisch verarbeiteter Informationen die Schmelzeverteilung der Düse mittels eines Dehnbolzensystems über die Breite geregelt. Die Folie wurde anschließend aufgewickelt. Die Dicke der erhaltenen zweischichtigen Folie betrug ca. 53 µm (10µm innere Schicht und 43µm äußere Schicht). Im Boilingtest ist keine Blasenbildung festzustellen. Der Abzugsschnelltest ergibt für die innere Schicht einen Wert von 5 und für die äußere Schicht einen Wert von 1 bis 2.

### Beispiel 4: Herstellung einer dreischichtigen Folie

Die Folie gemäß Beispiel 4 wurde analog zu der Folie gemäß Beispiel 3 hergestellt. Zusätzlich wurde in diesem Fall jedoch über einen dritten Einschneckenextruder ein dritter Schmelzefilm auf die äußere Schicht mittels einen Coexadapter aufgebracht. Dies könnte alternativ auch über eine dreischichtige Coextrusionsdüse erfolgen. Als Material wurde dazu das besonders hochmolekulare Plexiglas^{®} 8H der Firma Evonik Industries AG verwendet. Dabei handelt es sich um ein PMMA mit 1 gew%igen Anteil Methylacrylatanteil, einem Molekulargewicht M_{w} von 147 000 g/mol und einer Vicat-Erweichungstemperatur von 108 °C. Diese dritte Schicht wurde mit einer Dicke von 10 µm aufgetragen. Im Boilingtest ist keine Blasenbildung festzustellen. Der Abzugsschnelltest ergibt für die innere Schicht einen Wert von 5 und für die äußere Schicht einen Wert von 1.

### Vergleichsbeispiel 1:

Es wird eine einschichtige Folie aus dem Material der inneren Schicht mit einer Dicke von 50 µm mittels Chill-Roll-Prozess hergestellt. Die hierzu eingesetzte Extrusionsanlage bestand aus einem Einschneckenextruder mit Schmelzepumpe und einer Breitschlitzextrusionsdüse.
Die Gesamtapparatur wies zusätzlich ein Walzwerk (L-Konfiguration) und eine Wickelvorrichtung auf.
Der Abzugsschnelltest ergibt für die beide Schichten einen Wert von 5. Die Klebwirkung tritt somit beidseitig auf. Dies führt zu Problemen beim Abrollen von einer Folienrolle zur Weiterverarbeitung und zu einer Belagsbildung auf einer Rollenanlage, wie sie zur Weiterverarbeitung eingesetzt würde. Nach Laminierung mit der PVC-Folie ist im Boilingtest keine Blasenbildung festzustellen.

### Vergleichsbeispiel 2:

Es wird eine einschichtige Folie aus dem Material der äußeren Schicht mit einer Dicke von 50 µm mittels Chill-Roll-Prozess, analog zu Vergleichsbeispiel 1 hergestellt.
Nach Laminierung mit der PVC-Folie ist im Boilingtest eine starke Blasenbildung festzustellen.

Der Abzugsschnelltest ergibt für die Ober- und für die Unterseite der Folie einen Wert von 1.

## Patentansprüche

1. PMMA-Folie, aufweisend mindestens zwei Schichten, die jeweils ein PMMA-Matrixmaterial aufweisen, **dadurch gekennzeichnet, dass** mindestens eine der beiden Schichten Schlagzähmodifizierungsmittel enthält, und dass die innere Schicht zusätzlich zu dem PMMA-Matrixmaterial zwischen 2,0 und 20 Gew% eines oligomeren PMMA, mit einem mittels SEC gegen einen PMMA-Standard gemessenen gewichtsmittleren Molekulargewicht zwischen 300 und 1500 g/mol enthält.

2. PMMA-Folie gemäß Anspruch 1, **dadurch gekennzeichnet, dass** die äußere Schicht zwischen 0,5 und 20 Gew% eines oder mehrerer Mattierungsmittel enthält

3. PMMA-Folie gemäß Anspruch 2, **dadurch gekennzeichnet, dass** es sich bei dem Mattierungsmittel um SiOₓ-, TiO₂-, BaSO₄-, BaCO₃-Partikel oder um vernetzte Polymerpartikel mit einem Durchmesser zwischen 1 und 40 µm handelt.

4. PMMA-Folie gemäß Anspruch 3, **dadurch gekennzeichnet, dass** es sich bei den vernetzten Polymerpartikeln um PMMA- oder Silikonpartikel handelt.

5. PMMA-Folie gemäß mindestens einem der Ansprüche 1 bis 4 **dadurch gekennzeichnet, dass** die innere Schicht zwischen 0,01 und 0,5 Gew% eines oder mehrerer Antiblockingsmittel enthält.

6. PMMA-Folie gemäß Anspruch 5, **dadurch gekennzeichnet, dass** es sich bei dem Antiblockungsmittel um SiOₓ-, TiO₂-, BaSO₄-, BaCO₃-Partikel, vernetzte PMMA-Partikel oder vernetzte Silikon-Partikel mit einem Durchmesser zwischen 0,5 µm und 40 µm handelt.

7. PMMA-Folie gemäß mindestens einem der Ansprüche 1 bis 6, **dadurch gekennzeichnet, dass** beide Schichten Schlagzähmodifizierungsmittel aufweisen.

8. PMMA-Folie gemäß mindestens einem der Ansprüche 1 bis 7, **dadurch gekennzeichnet, dass** es sich bei den Schlagzähmodifizierungsmittel um Kern-Schale- oder Kern-Schale-Schale-Partikel, mit mindestens einer Schale aus einem Poly(meth)acrylat, handelt.

9. PMMA-Folie gemäß mindestens einem der Ansprüche 1 bis 8, **dadurch gekennzeichnet, dass** das PMMA-Matrixmaterial erhalten wird durch eine Polymerisation einer Zusammensetzung bestehend aus 80 bis 100 Gew% Methylmethacrylat und 0 bis 20 Gew.-% eines oder mehrerer weiterer ethylenisch ungesättigter, radikalisch polymerisierbarer Monomerer, bevorzugt Alkylacrylate.

10. PMMA-Folie gemäß mindestens einem der Ansprüche 1 bis 9, **dadurch gekennzeichnet, dass** die äußere Schicht zwischen 2,0 und 12 Gew%, bevorzugt zwischen 4,0 und 15 Gew% eines oder mehrerer Mattierungsmittel enthält.

11. PMMA-Folie gemäß Anspruch 3, **dadurch gekennzeichnet, dass** das Mattierungsmittel einen Durchmesser zwischen 1,5 und 20 µm, bevorzugt zwischen 2,0 und 6,0 µm aufweist.

12. PMMA-Folie gemäß mindestens einem der Ansprüche 1 bis 11, **dadurch gekennzeichnet, dass** die innere Schicht zusätzlich zu dem PMMA-Matrixmaterial zwischen 5,0 und 18 Gew%, bevorzugt zwischen 10 und 12 Gew% des oligomeren PMMA enthält.

13. PMMA-Folie gemäß mindestens einem der Ansprüche 1 bis 12, **dadurch gekennzeichnet, dass** die innere und/oder die äußere Schicht zusätzlich HALS-Verbindungen, und Triazine und/oder Benztriazole enthält.

14. PMMA-Folie gemäß mindestens einem der Ansprüche 1 bis 13, **dadurch gekennzeichnet, dass** die innere Schicht eine Dicke zwischen 2 und 100 µm, bevorzugt zwischen 10 und 60 µm aufweist, und dass die äußere Schicht eine Dicke zwischen 2 und 100 µm, bevorzugt zwischen 5 und 50 µm aufweist.

15. PMMA-Folie gemäß mindestens einem der Ansprüche 1 bis 14, **dadurch gekennzeichnet, dass** die Folie eine dritte Schicht mit einer Dicke zwischen 2 und 100 µm, bevorzugt zwischen 5 und 50 µm auf der äußeren Schicht aufweist.

16. PMMA-Folie gemäß Anspruch 15, **dadurch gekennzeichnet, dass** es sich bei der dritten Schicht um eine kratzfeste PMMA-, eine PVDF-, eine PMMA/PVDF-Schicht oder eine Dekorschicht handelt.

17. Verfahren zur Beschichtung eines Gegenstands, **dadurch gekennzeichnet, dass** eine Polymethacrylat-Folie nach einem oder mehreren der Ansprüche 1 bis 16 durch Kaschieren und/oder Verkleben mit dem Gegenstand fest verbunden wird.

18. Verfahren zur Beschichtung eines Gegenstands nach Anspruch 17, **dadurch gekennzeichnet, dass** der Gegenstand aus Kunststoff, bevorzugt aus PVC besteht.

## Claims

1. PMMA foil having at least two layers which respectively comprise a PMMA matrix material, **characterized in that** at least one of the two layers comprises impact modifiers, and that the inner layer comprises, in addition to the PMMA matrix material, from 2.0 to 20% by weight of an oligomeric PMMA, with a weight-average molar mass of from 300 to 1500 g/mol, measured by means of SEC against a PMMA standard.

2. PMMA foil according to Claim 1, **characterized in that** the outer layer comprises from 0.5 to 20% by weight of one or more matting agents.

3. PMMA foil according to Claim 2, **characterized in that** the matting agent involves SiOₓ particles, TiO₂ particles, BaSO₄ particles or BaCO₃ particles or involves crosslinked polymer particles with a diameter of from 1 to 40 µm.

4. PMMA foil according to Claim 3, **characterized in that** the crosslinked polymer particles involve PMMA particles or silicone particles.

5. PMMA foil according to at least one of Claims 1 to 4, **characterized in that** the inner layer comprises from 0.01 to 0.5% by weight of one or more antiblocking agents.

6. PMMA foil according to Claim 5, **characterized in that** the antiblocking agent involves SiOₓ particles, TiO₂ particles, BaSO₄ particles or BaCO₃ particles, crosslinked PMMA particles or crosslinked silicone particles with a diameter of from 0.5 µm to 40 µm.

7. PMMA foil according to at least one of Claims 1 to 6, **characterized in that** both layers comprise impact modifiers.

8. PMMA foil according to at least one of Claims 1 to 7, **characterized in that** the impact modifiers involve core-shell particles or core-shell-shell particles, with at least one shell made of a poly(meth)acrylate.

9. PMMA foil according to at least one of Claims 1 to 8, **characterized in that** the PMMA matrix material is obtained through polymerization of a composition composed of from 80 to 100% by weight of methyl methacrylate and from 0 to 20% by weight of one or more other ethylenically unsaturated monomers capable of free-radical polymerization, preferably alkyl acrylates.

10. PMMA foil according to at least one of Claims 1 to 9, **characterized in that** the outer layer comprises from 2.0 to 12% by weight, preferably from 4.0 to 15% by weight, of one or more matting agents.

11. PMMA foil according to Claim 3, **characterized in that** the diameter of the matting agent is from 1.5 to 20 µm, preferably from 2.0 to 6.0 µm.

12. PMMA foil according to at least one of Claims 1 to 11, **characterized in that** the inner layer comprises, in addition to the PMMA matrix material, from 5.0 to 18% by weight, preferably from 10 to 12% by weight, of the oligomeric PMMA.

13. PMMA foil according to at least one of Claims 1 to 12, **characterized in that** the inner and/or the outer layer comprises, in addition, HALS compounds, and triazines and/or benzotriazoles.

14. PMMA foil according to at least one of Claims 1 to 13, **characterized in that** the thickness of the inner layer is from 2 to 100 µm, preferably from 10 to 60 µm, and the thickness of the outer layer is from 2 to 100 µm, preferably from 5 to 50 µm.

15. PMMA foil according to at least one of Claims 1 to 14, **characterized in that** the foil comprises, on the outer layer, a third layer of thickness from 2 to 100 µm, preferably from 5 to 50 µm.

16. PMMA foil according to Claim 15, **characterized in that** the third layer involves a scratch-resistant PMMA layer, a PVDF layer, a PMMA/PVDF layer or a decorative layer.

17. Process for the coating of an article, **characterized in that** a polymethacrylate foil according to one or more of Claims 1 to 16 is securely bonded to the article by lamination and/or adhesive bonding.

18. Process for the coating of an article according to Claim 17, **characterized in that** the article is composed of plastic, preferably of PVC.

## Revendications

1. Feuille de PMMA, présentant au moins deux couches, qui présentent à chaque fois un matériau de matrice en PMMA, **caractérisée en ce qu'**au moins une des deux couches contient un agent de modification de la résilience et **en ce que** la couche interne contient, en plus du matériau de matrice en PMMA, entre 2,0 et 20% en poids d'un PMMA oligomère, présentant un poids moléculaire pondéral moyen mesuré par chromatographie d'exclusion stérique par rapport à un étalon de PMMA, entre 300 et 1500 g/mole.

2. Feuille de PMMA selon la revendication 1, **caractérisée en ce que** la couche externe contient entre 0,5 et 20% en poids d'un ou de plusieurs agents de matage.

3. Feuille de PMMA selon la revendication 2, **caractérisée en ce qu'**il s'agit, pour l'agent de matage, de particules de SiOₓ, de TiO₂, de BaSO₄, de BaCO₃ ou de particules polymères réticulées présentant un diamètre entre 1 et 40 µm.

4. Feuille de PMMA selon la revendication 3, **caractérisée en ce qu'**il s'agit, pour les particules polymères réticulées, de particules de PMMA ou de silicone.

5. Feuille de PMMA selon au moins l'une quelconque des revendications 1 à 4, **caractérisée en ce que** la couche interne contient entre 0,01 et 0,5% en poids d'un ou de plusieurs agents antiadhésifs.

6. Feuille de PMMA selon la revendication 5, **caractérisée en ce qu'**il s'agit, pour l'agent antiadhésif, de particules de SiOₓ, de TiO₂, de BaSO₄, de BaCO₃, de particules réticulées de PMMA ou de particules réticulées de silicone présentant un diamètre entre 0,5 et 40 µm.

7. Feuille de PMMA selon au moins l'une quelconque des revendications 1 à 6, **caractérisée en ce que** les deux couches présentent des agents de modification de la résilience.

8. Feuille de PMMA selon au moins l'une quelconque des revendications 1 à 7, **caractérisée en ce qu'**il s'agit, pour les agents de modification de la résilience, de particules à noyau-coquille ou de particules à noyau-coquille-coquille, présentant au moins une coquille en poly(méth)acrylate.

9. Feuille de PMMA selon au moins l'une quelconque des revendications 1 à 8, **caractérisée en ce que** le matériau de matrice en PMMA est obtenu par une polymérisation d'une composition constituée par 80 à 100% en poids de méthacrylate de méthyle et par 0 à 20% en poids d'un ou de plusieurs autres monomères éthyléniquement insaturés, polymérisables par voie radicalaire, de préférence des acrylates d'alkyle.

10. Feuille de PMMA selon au moins l'une quelconque des revendications 1 à 9, **caractérisée en ce que** la couche externe contient entre 2,0 et 12% en poids, de préférence entre 4,0 et 15% en poids, d'un ou de plusieurs agents de matage.

11. Feuille de PMMA selon la revendication 3, **caractérisée en ce que** l'agent de matage présente un diamètre entre 1,5 et 20 µm, de préférence entre 2,0 et 6,0 µm.

12. Feuille de PMMA selon au moins l'une quelconque des revendications 1 à 11, **caractérisée en ce que** la couche interne contient, en plus du matériau de matrice en PMMA, entre 5,0 et 18% en poids, de préférence entre 10 et 12% en poids, de PMMA oligomère.

13. Feuille de PMMA selon au moins l'une quelconque des revendications 1 à 12, **caractérisée en ce que** la couche interne et/ou la couche externe contient en outre des composés de type HALS et des triazines et/ou des benzotriazoles.

14. Feuille de PMMA selon au moins l'une quelconque des revendications 1 à 13, **caractérisée en ce que** la couche interne présente une épaisseur entre 2 et 100 µm, de préférence entre 10 et 60 µm, et **en ce que** la couche externe présente une épaisseur entre 2 et 100 µm, de préférence entre 5 et 50 µm.

15. Feuille de PMMA selon au moins l'une quelconque des revendications 1 à 14, **caractérisée en ce que** la feuille présente une troisième couche présentant une épaisseur entre 2 et 100 µm, de préférence entre 5 et 50 µm, sur la couche externe.

16. Feuille de PMMA selon la revendication 15, **caractérisée en ce qu'**il s'agit, pour la troisième couche, d'une couche résistant aux rayures en PMMA, en PVDF, en PMMA/PVDF ou d'une couche décorative.

17. Procédé pour le revêtement d'un objet, **caractérisé en ce qu'**une feuille de polyméthacrylate selon l'une ou plusieurs des revendications 1 à 16 est assemblée solidement par contrecollage et/ou collage avec l'objet.

18. Procédé pour le revêtement d'un objet selon la revendication 17 , **caractérisé en ce que** l'objet est en matériau synthétique, de préférence en PVC.
